# EUROPEAN PATENT APPLICATION

(11) **EP 4 726 346 A1**
(43) Date of publication of application: **15.04.2026**
(21) Application number: 25204056.3
(22) Date of filing: 23.09.2025
(51) Int. Cl.: G01L 1/26, G01L 19/14, G01L 19/00

(54) **SENSOR WITH MOUNTING FLANGE AND ASSOCIATED METHOD**

(30) Priority: 11.10.2024 US 202418913086
(71) Applicant: STMicroelectronics International N.V., 1228 Plan-les-Ouates, Geneva (CH)
(72) Inventor: MAGGI, Luca, 23852 GARLATE (LC) (IT); DEL SARTO, Marco, 20900 MONZA (MB) (IT)
(74) Representative: Studio Torta S.p.A.

(57) **Abstract**

In accordance with various embodiments of the present disclosure, a sensor is provided that comprises a substrate having first and second opposing major sides; a cover affixed to the first major side of the substrate to define a chamber, the cover defining an opening to the chamber on a side of the cover opposite the first major side of the substrate, the cover sized and positioned such that a portion of the substrate extends beyond a perimeter of the cover; a sense die mounted on the first major side of the substrate within the chamber; and a mounting ring disposed on the portion of the first major side of the substrate that extends beyond the perimeter of the cover. The mounting ring is adapted to have an external structure affixed thereto to provide a watertight connection between the sensor and the external structure.

## Description

### FIELD OF THE INVENTION

The present invention relates generally to a sensor and to a method of manufacturing the sensor and, more particularly, to waterproof pressure and force sensors.

### BACKGROUND

Waterproof pressure and/or force sensors (hereinafter collectively "pressure sensors") are often used in mobile devices such as smart phones and smart watches. It is often desirable to provide a waterproof seal between such a waterproof pressure sensor and other components of the device in which the waterproof pressure sensor is mounted.

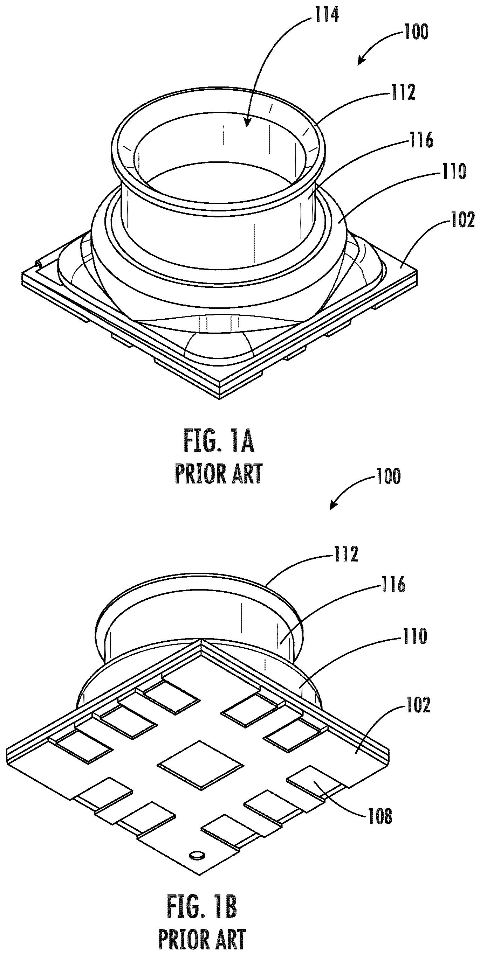

As illustrated in FIGS. 1A and 1B, an example of such a waterproof pressure sensor 100 comprises a printed circuit board (PCB) substrate 102 on which a sense die (not illustrated) is mounted. A sense die is a chip with a sense diaphragm that can detect the force of air or liquid (or direct mechanical force, in the case of a force sensor) against the die. Electrical contacts 108 (called lands or pads) on the bottom of the substrate 102 enable an electrical connection between the waterproof pressure sensor and, e.g., a motherboard of the mobile device (not illustrated).

A lid 110 is affixed (e.g., glued) to the top surface of the substrate 102 and forms a chamber 114 that encloses the sense die. The lid 110 defines an opening 112 to provide access to the chamber 114. The chamber 114 is filled with a potting gel (not illustrated) or the like that isolates the sense die from any liquids that might damage the sense die. The gel transfers the force of the liquid to the sense die. The lid 110 has a groove 116 for an O-ring (not illustrated) that enables the pressure sensor to be sealed against a structural element (not illustrated) of the mobile device to prevent liquid intrusion. This structural element to which the pressure sensor is mounted can be the mobile device's case and will be referred to herein as the case.

The use of such an O-ring is effective, but its mounting requires a manual operation which impacts on the throughput and cost of the final assembly of the mobile device. Moreover, the thickness of the metal lid is quite high due to the space required for the O-ring, which is problematic due to the limited space in such mobile devices. In one specific example of a sensor such as is illustrated in FIGS 1A and 1B, the substrate of the sensor measures about 2.8 millimeters (mm) x 2.8 mm and the overall height of the sensor is about 2.1 mm.

Applicant has identified many technical challenges and difficulties associated with such waterproof pressure sensors. Through applied effort, ingenuity, and innovation, Applicant has solved problems related to such waterproof pressure sensor by developing solutions embodied in the present disclosure, which are described in detail below.

### BRIEF SUMMARY

The present invention relates to a sensor and to a method of manufacturing the sensor, as defined in the annexed claims.

Various embodiments described herein related to sensors and methods of providing a waterproof seal between a sensor and a structure external to the sensor.

In accordance with various embodiments of the present disclosure, a sensor is provided that comprises a substrate having first and second opposing major sides; a cover affixed to the first major side of the substrate to define a chamber, the cover defining an opening to the chamber on a side of the cover opposite the first major side of the substrate, the cover sized and positioned such that a portion of the substrate extends beyond a perimeter of the cover; a sense die mounted on the first major side of the substrate within the chamber; and a mounting ring disposed on the portion of the first major side of the substrate that extends beyond the perimeter of the cover. The mounting ring is adapted to have an external structure affixed thereto to provide a watertight connection between the sensor and the external structure.

In some embodiments, the mounting ring comprises a solder ring.

In some embodiments, the sensor further comprises a plurality of lands disposed on the substrate and adapted to provide a plurality of electrical connections to an external device.

In some embodiments, the plurality of lands is disposed on the second major side of the substrate.

In some embodiments, the plurality of lands is disposed on the first major side of the substrate between the mounting ring and a perimeter of the substrate.

In some embodiments, the sensor comprises a force sensor or a pressure sensor.

In some embodiments, the sensor further comprises a potting gel contained within the chamber.

In some embodiments, the mounting ring is adapted to have an external structure affixed thereto via soldering or an adhesive.

In accordance with various embodiments of the present disclosure, a method of providing a waterproof seal between a sensor and a structure external to the sensor is provided that comprises affixing an external structure along an entire length of a mounting ring of a sensor to provide a watertight connection between the sensor and the external structure. The sensor comprises a substrate having first and second opposing major sides; a cover affixed to the first major side of the substrate to define a chamber, the cover defining an opening to the chamber on a side of the cover opposite the first major side of the substrate, the cover sized and positioned such that a portion of the substrate extends beyond a perimeter of the cover; and a sense die mounted on the first major side of the substrate within the chamber. The mounting ring is disposed on the portion of the first major side of the substrate that extends beyond the perimeter of the cover.

### BRIEF DESCRIPTION OF THE DRAWINGS

The description of the illustrative embodiments shouldbe read in conjunction with the accompanying figures. It will be appreciated that, for simplicity and clarity of illustration, elements illustrated in the figures have not necessarily been drawn to scale, unless described otherwise. For example, the dimensions of some of the elements can be exaggerated relative to other elements, unless described otherwise. Embodiments incorporating teachings of the present disclosure are shown and described with respect to the figures presented herein, in which:
FIGS. 1A and 1B are perspective views of a prior art waterproof pressure sensor;
FIG. 2 is a perspective view of an example waterproof pressure sensor, in accordance with some embodiments of the present disclosure;
FIG. 3 is a sectional perspective view of the example waterproof pressure sensor of FIG. 2;
FIG. 4 is a perspective view of the example waterproof pressure sensor of FIG. 2 affixed to an external structure;
FIG. 5 is a sectional perspective view of the example waterproof pressure sensor of FIG. 2 affixed to the external structure;
FIG. 6 is a perspective view of an example waterproof pressure sensor, in accordance with some alternative embodiments of the present disclosure;
FIG. 7 is a perspective view of the example waterproof pressure sensor of FIG. 6 affixed to an external structure; and
FIG. 8 is a sectional perspective view of the example waterproof pressure sensor of FIG. 6 affixed to the external structure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures can be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature can be optionally included in some embodiments, or it can be excluded.

Various embodiments of the present disclosure overcome the above technical challenges and difficulties and provide various technical improvements and advantages based on, for example, but not limited to, providing a waterproof pressure sensor or force sensor which avoids the use of an O-ring, addressing the sealing against liquid with direct attachment (via soldering or gluing) of the external structure (e.g., the case of a mobile device) to the substrate of the pressure sensor package. In various embodiments, the pressure sensor has a substrate that is larger than the lid (which no longer has an O-ring groove) such that the portion of the substrate extending beyond the lid functions as a mounting flange to which the case of the mobile device is affixed.

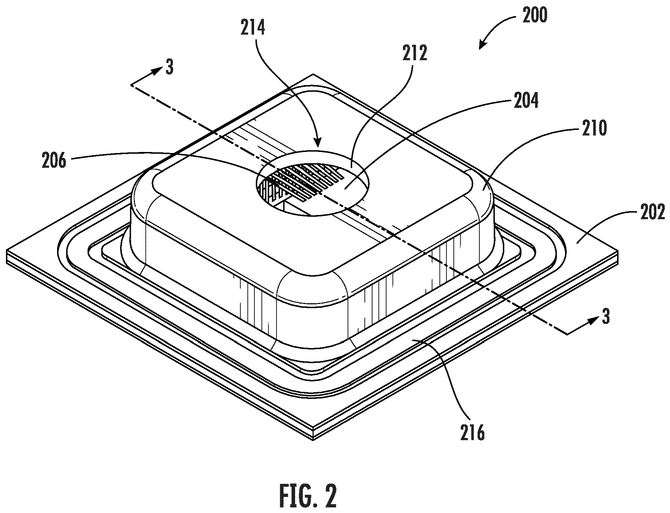

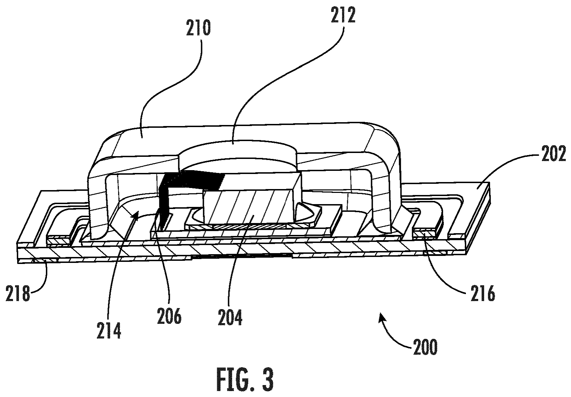

Referring now to FIGS. 2 and 3, an example waterproof pressure sensor is illustrated in accordance with some embodiments of the present disclosure. Such a pressure sensor is installed in, for example, a mobile device such as a mobile phone or smart watch. As illustrated in FIGS. 2 and 3, an example pressure sensor 200 comprises a substrate 202, such as a multi-layer PCB substrate upon which a sense die 204 is mounted. The substrate can comprise any suitable substrate, such as organic or ceramic. The sense die 204 is electrically connected to the substrate 202 via a plurality of wire leads 206 (or any other suitable mechanism). A lid or cover 210 is affixed to the substrate 202, such as via an adhesive. The cover 210 can be constructed out of any suitable material, such as any suitable metal or plastic. The cover 210 defines a chamber 214 within which the sense die 204 resides. A hole 212 is defined in the top wall of the cover 210 to provide access to the chamber 214. The chamber 214 is filled with a potting gel (not illustrated) or the like that isolates the sense die 204 from any liquids that might damage the sense die 204.

In various embodiments, the substrate is larger than is needed just for mounting the cover. As illustrated in FIG. 2, the substrate 202 is sized such that the substrate 202 extends far enough beyond the perimeter of the cover 210 to enable an external structure to be affixed to the extended area of the substrate 202. In this regard, the extended area of the substrate 202 forms a mounting flange to which the external structure can be affixed. A mounting ring 216 is disposed on this extended area of the substrate 202 surrounding, but spaced apart from, the cover 210. The mounting ring 216 can comprise any suitable material to enable affixation of the external structure, such as by soldering or an adhesive. For example, the mounting ring 216 is formed from an exposed, isolated ring of a copper layer of the substrate 202. Such a copper mounting ring would facilitate soldering of the external structure. In this regard, such a copper mounting ring is termed a solder ring. In one specific example of a sensor such as is illustrated in FIGS 2-5, the substrate of the sensor measures about 3.8 mm x 3.8 mm and the overall height of the sensor is about 1.0 mm.

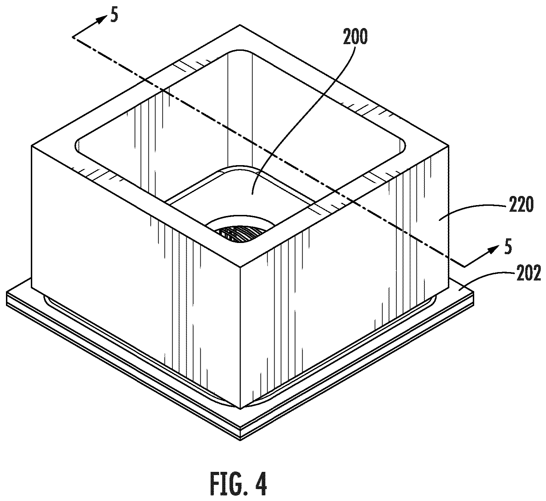

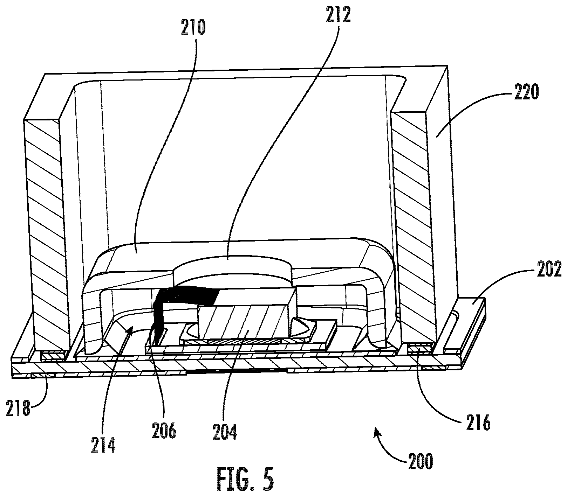

Referring now to FIGS. 4 and 5, the example waterproof pressure sensor 200 of FIGS. 2 and 3 is illustrated affixed to an external structure. As illustrated in FIGS. 4 and 5, the sensor 200 is affixed to a rectangular structure 220 having four walls. Such a structure 220 is, for example, a portion of a case of a mobile device. As best seen in FIG. 5, the bottom edges of the structure 220 are affixed to the mounting ring 216, such as, for example, by soldering or an adhesive. Although not illustrated, the structure 220 typically extends further and/or is attached to one or more other structures not illustrated in FIGS. 4 and 5. When the example sensor is affixed to an external structure, as illustrated in FIGS. 4 and 5, the sensor 200 can be exposed to a liquid (e.g., water) to enable sensing of the pressure of the liquid (e.g., to determine depth) while the rest of the internal components of the device are isolated from the liquid.

In the embodiment of FIGS. 2-5, the lands 218 (two of which are visible in FIG. 5) for electrically connecting the pressure sensor 200 to a device (e.g., a motherboard of a mobile device) are on the bottom side of the substrate 202 (i.e., opposite the sense die). In various embodiments, the lands enable the device to electrically connect to and receive electrical signals from the sense die.

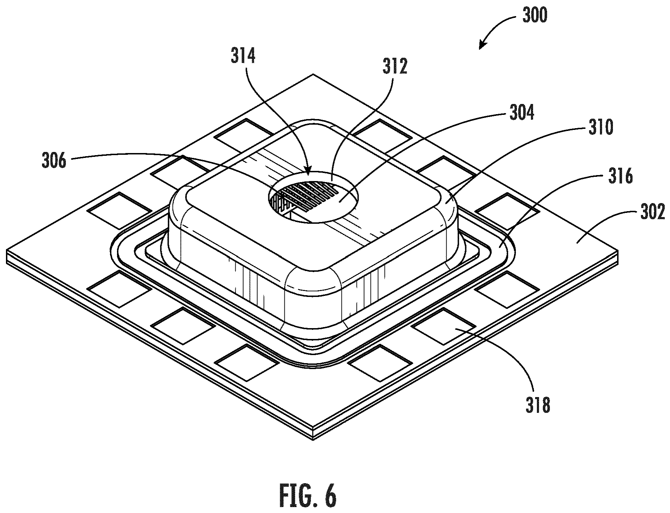

Referring now to FIGS. 6-8, an example waterproof pressure sensor is illustrated in accordance with some alternative embodiments of the present disclosure. In the embodiment of FIGS. 6-8, the lands for electrically connecting the pressure sensor to a device (e.g., a motherboard of a mobile device) are on the top side of the substrate (i.e., same side as the sense die). As illustrated in FIG. 6, an example pressure sensor 300 comprises a substrate 302, such as a multi-layer PCB substrate upon which a sense die 304 is mounted. The sense die 304 is electrically connected to the substrate 302 via a plurality of wire leads 306 (or any other suitable mechanism). A lid or cover 310 is affixed to the substrate 302, such as via an adhesive. The cover 310 can be constructed out of any suitable material, such as any suitable metal or plastic. The cover 310 defines a chamber 314 within which the sense die 304 resides. A hole 312 is defined in the top wall of the cover 310 to provide access to the chamber 314. The chamber 314 is filled with a potting gel (not illustrated) or the like that isolates the sense die 304 from any liquids that might damage the sense die 304.

In various embodiments, the substrate is larger than is needed just for mounting the cover. As illustrated in FIG. 6, the substrate 302 is sized such that the substrate 302 extends far enough beyond the perimeter of the cover 310 to enable an external structure to be affixed to the extended area of the substrate 302. In this regard, the extended area of the substrate 302 forms a mounting flange to which the external structure can be affixed. A mounting ring 316 is disposed on this extended area of the substrate 302 surrounding, but spaced apart from, the cover 310. The mounting ring 316 can comprise any suitable material to enable affixation of the external structure, such as by soldering or an adhesive. For example, the mounting ring 316 is formed from an exposed, isolated ring of a copper layer of the substrate 202. Such a copper mounting ring would facilitate soldering of the external structure. In this regard, such a copper mounting ring is termed a solder ring.

As illustrated in FIG. 6, the substrate 302 of the sensor 300 is sized such that the substrate 302 extends far enough beyond the perimeter of the cover 310 to also enable a plurality of lands 318 to be disposed on the top surface of the substrate 302 between the mounting ring 316 and the outer perimeter of the substrate 302. As illustrated in FIG. 6, the lands 318 are disposed about all four sides of the cover 310, however any suitable arrangement of the lands can be used. In one specific example of a sensor such as is illustrated in FIGS 6-8, the substrate of the sensor measures about 4.3 mm x 4.3 mm and the overall height of the sensor is about 1.0 mm.

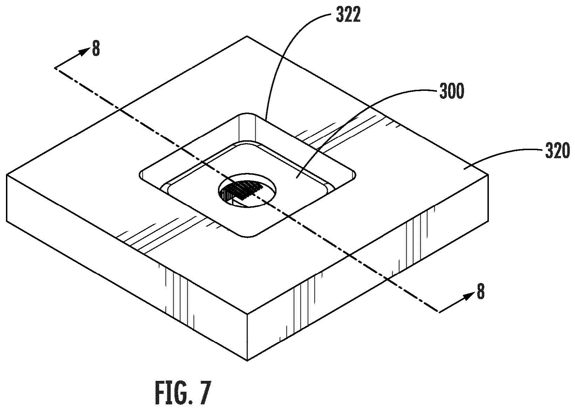

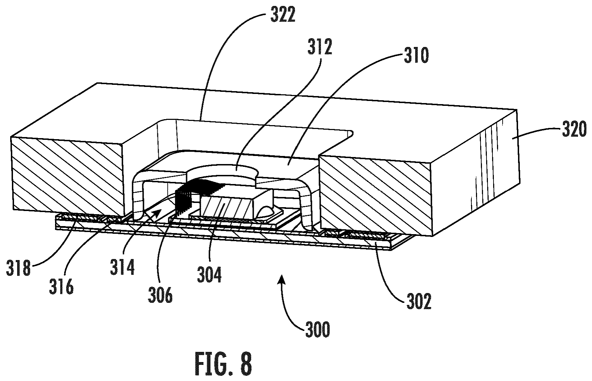

This positioning of the lands 318 on the top surface of the substrate 302 enables different mounting options than are available with the embodiments of FIGS. 1-5. Referring now to FIGS. 7 and 8, the example waterproof pressure sensor 300 of FIG. 6 is illustrated affixed to an external structure. As illustrated in FIGS. 7 and 8, the sensor 300 is affixed to a planar structure 320 having a through-hole 322 defined therein. Such a structure 320 is, for example, a motherboard of a mobile device. As best seen in FIG. 6, the sensor 300 is affixed to the mounting ring 316 of the structure 320 such that the cover protrudes through the through-hole 322. In the embodiments of FIGS. 6-8, the sensor can be sealed and electrically connected to the motherboard at the same time. In the embodiments of FIGS. 6-8, because the cover protrudes through the through-hole 322, the overall profile of the motherboard and sensor is reduced. The embodiments of FIGS. 6-8 are of interest for force sensors as this placement ("embedded" in the motherboard) positions the sensor close to the point where the force is applied.

In various embodiments, the method of attachment between the case and the substrate provides the required sealing again liquid infiltration without the need for an O-ring. Because the cover does not require an O-ring, the overall thickness of the pressure sensor package is reduced.

### Conclusion

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components can be used in conjunction with the system. Therefore, it is to be understood that the disclosures are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

While various embodiments in accordance with the principles disclosed herein have been shown and described above, modifications thereof can be made by one skilled in the art without departing from the teachings of the disclosure. The embodiments described herein are representative only and are not intended to be limiting. Many variations, combinations, and modifications are possible and are within the scope of the disclosure. The disclosed embodiments relate primarily to fragmented wideband tympanometry techniques for true wireless stereo, however, one skilled in the art recognizes that such principles can be applied to any audio device. Alternative embodiments that result from combining, integrating, and/or omitting features of the embodiment(s) are also within the scope of the disclosure.

While this detailed description has set forth some embodiments of the present disclosure, other variants are possible. For example, the invention applies to any form of sensor in which a waterproof connection to an external device is desired.

## Claims

1. A sensor (200; 300) comprising:
a substrate (202; 302) having first and second opposing sides;
a cover (210; 310) affixed to the first side of the substrate to define a chamber (214; 314), the cover defining an opening (212; 312) to the chamber on a side of the cover opposite the first side of the substrate, the cover being sized and positioned such that a portion of the substrate extends beyond a perimeter of the cover;
a sense die (204; 304) mounted on the first side of the substrate within the chamber; and
a mounting ring (216; 316) disposed on the portion of the first side of the substrate that extends beyond the perimeter of the cover;
wherein the mounting ring (216; 316) is adapted to have an external structure affixed thereto to provide a watertight connection between the sensor and the external structure.

2. The sensor of claim 1, wherein the mounting ring comprises a solder ring.

3. The sensor of claim 1 or 2, further comprising a plurality of lands (218; 318) disposed on the substrate and adapted to provide a plurality of electrical connections to an external device.

4. The sensor of anyone of claims 1-3, wherein the plurality of lands (218) is disposed on the second side of the substrate (202).

5. The sensor of claim 4, wherein the external structure is a case of a mobile device.

6. The sensor of anyone of claims 1-3, wherein the plurality of lands (318) is disposed on the first side of the substrate between the mounting ring (316) and a perimeter of the substrate.

7. The sensor of claim 6, wherein the external structure comprises a motherboard of a mobile device; and
wherein the motherboard is affixed to the mounting ring of the sensor such that the cover protrudes through a hole defined in the motherboard.

8. The sensor of anyone of the preceding claims, wherein the sensor (300) comprises a force sensor or a pressure sensor.

9. The sensor of anyone of the preceding claims, further comprising a potting gel contained within the chamber (214; 314).

10. The sensor of anyone of the preceding claims, wherein the mounting ring (216; 316) is adapted to have an external structure affixed thereto via soldering or an adhesive.

11. A method of providing a waterproof seal between a sensor (200; 300) and a structure external to the sensor, wherein the sensor comprises:
a substrate (202; 302) having first and second opposing sides;
a cover (210; 310) affixed to the first side of the substrate to define a chamber (214; 314), the cover defining an opening to the chamber on a side of the cover opposite the first side of the substrate, the cover being sized and positioned such that a portion of the substrate extends beyond a perimeter of the cover; and
a sense die (204; 304) mounted on the first side of the substrate within the chamber; and
wherein the mounting ring (216; 316) is disposed on the portion of the first side of the substrate that extends beyond the perimeter of the cover,
the method comprising the step of affixing the external structure along an entire length of a mounting ring (216; 316) of the sensor (200; 300) to provide a watertight connection between the sensor and the external structure.

12. The method of claim 11, further comprising the step of filling the chamber of the sensor with a potting gel.

13. The method of claim 11 or 12, wherein affixing an external structure along an entire length of a mounting ring of a sensor comprises soldering the external structure to the mounting ring or adhering the external structure to the mounting ring via an adhesive.
